# EUROPEAN PATENT SPECIFICATION

(11) **EP 3 210 830 B1**
(45) Date of publication and mention of the grant of the patent: **31.07.2019**
(21) Application number: 16157318.3
(22) Date of filing: 25.02.2016
(51) Int. Cl.: B60R 7/06, B60R 7/08, B60R 11/00

(54) **ACCESSORY STORAGE COMPARTMENT FOR A VEHICLE**
ZUBEHÖRSTAUFACH FÜR EIN FAHRZEUG
COMPARTIMENT DE STOCKAGE AUXILIAIRE POUR UN VÉHICULE

(43) Date of publication of application: 30.08.2017
(73) Proprietor: Volvo Car Corporation, 40 531 Göteborg (SE)
(72) Inventor: Göthlin, Mr. Jonas, 42343 Torslanda (SE)
(74) Representative: Valea AB

(56) References cited:
- CN-U- 203 093 912
- US-A- 3 385 547
- US-A- 5 246 190
- US-A- 5 975 594
- US-A1- 2009 266 858

## Description

### TECHNICAL FIELD

The invention relates to an arrangement for an accessory storage compartment in a vehicle for storage of utensils, e.g. a glove compartment, and in particular to a lid for such an accessory storage compartment.

### BACKGROUND

In the automotive industry there is generally a desire to make solutions for adapting the interior of the vehicle according to todays need for a driver or passenger. In almost every car today there is an accessory storage compartment present to be used for storing a variety of things. One example of such a storage compartment is a glove compartment which in general is located in front of the passenger seat. The location makes it accessible from the interior of the car, in particular for a passenger but also fairly easy to reach for a driver.

In general, a glove compartment is provided with an openable glove compartment lid. The glove compartment lid may be provided with a carrier hook on the outside for carrying items, e.g. a handbag. One such hook is disclosed in FR 2 894 907 wherein the hook also forms part of a locking/releasing arrangement for closing/opening of the openable lid. EP 2 508 695 and US 5,975,594 discloses still further examples of hooks attached to the outside of an openable lid for a glove compartment. These hooks are operable to switch between a stowed position and use position for carrying items.

Patent application US 2009266858 A1 discloses, according to the abstract, a glove box and utility hook assembly for a motor vehicle. The assembly includes a tether having one end secured to a hook member and another end secured to a portion defining a glove box, such that the hook member is moveable between a stowed position located within the glove box and a use position located outside of the glove box. Furthermore, according to the abstract, the hook member includes a lip portion for retaining and suspending items within a vehicle.

Still another hook arrangement for a lid for a glove compartment is disclosed in WO 99/052 741 wherein a bar attached to a strap may switch between a storage position on the inside of the lid and a usage position on the outside of the lid. However, even though these documents describe different carrier hooks for a lid for a glove compartment there is a desire to provide a functional arrangement which in an easy manner may change the hook from a storage position in which the hook does not aesthetically or physically is disturbing to its operative position wherein the hook may be used to carry an item.

### SUMMARY

Consequently, an object of the invention is to provide a carrier hook for the lid of an accessory storage compartment which may be switched from a storage position to an operative position which is robust, easy to handle and provide an aesthetically attracting design.

The invention relates to a lid for an accessory storage compartment, an accessory storage compartment and a vehicle. The accessory storage compartment lid is designed for covering an access opening of the accessory storage compartment. In the following, the examples for such an accessory storage compartment and an associated lid will be exemplified for a glove compartment but the examples could be generalized for the like compartments for storing rather small items which generally have the size of an ordinary glove compartment. Hence, a glove compartment lid has an inside intended to face towards the interior of a glove compartment when the lid is closed and positioned to cover the access opening of the glove compartment and an outside intended to face away from the interior of a glove compartment when the lid is positioned to cover the opening of the glove compartment. The glove compartment lid is further provided with a hook arrangement comprising a shaft and a hook such that the hook is attached to the glove compartment lid via the shaft. The hook arrangement is designed to be able to switch between different positions. In a first, storage position (I) is the hook located on the inside of the glove compartment lid. In a second, operative position (II) is the hook located on the outside of the glove compartment lid and may be used to carry an item. The hook could of course be used for any kind of items having a suitable weight and being adapted to be hooked, e.g. a woman's purse. However, the hook is in particular suitable for carrying stuff which may be attached to the hook and otherwise may be negatively affected from being tilted or turned around if located directly on a seat or other part, e.g. take away food in a bag. The hook arrangement is further defined by having a shaft which is a rigid, self-supporting structure. By this expression is meant the shaft is made to be dimensionally stable and essentially keep its shape independent of how the shaft is hold or supported. Furthermore, the shaft may be slightly flexible if needed since an essentially totally stiff shaft may be very brittle. However, the shaft will have the same shape when positioned in its, first storage position (I) and its second, operative position (II) as well as during the shifting operation of the hook arrangement between these positions unless it is subjected to unnecessary large forces urging its shape to change. This means that the hook arrangement may be shifted between and transferred in the same configuration all times and change between well-defined positions due to the rigid and self-supporting structure of the shaft. There may thus not be a need to precisely guide or use manual precision work to change the hook arrangement between the operative and storage position of the hook. For example, if the hook arrangement is attached to the glove compartment lid via its shaft by a hinge the hook arrangement may switch between the predefined positions by a simple pivotal motion of the shaft around the hook arrangement hinge.

The hook arrangement may be provided with some kind of locking mechanism preventing it from vibrating when it is positioned in its first, storage position, e.g. may the hook have a close fit in a recess designed to receive the hook arrangement when it is in its storage position. Preferably is the hook arrangement designed such that it will be kept in place by gravity forces when being placed in its storage position.

The shaft and the hook comprised in the hook arrangement may be designed as an integral entity. The hook and shaft could for example be made of the same material which makes it simple to manufacture such an item, e.g. by moulding or bending sheet material. The shaft and hook comprised in the hook arrangement could be made of a polymeric material. Alternatively, it may be made from metal which is generally a stronger material and may be used if thinner structures are desired, e.g. for being able to fit in a small gap.

The hook arrangement hinge may be located on the inside of the glove compartment lid. Such an arrangement may provide aesthetical benefits as well as functional advantages. By placing the hook arrangement hinge on the inside of the lid will the hook arrangement be invisible from the outside of the glove compartment lid, i.e. from inside the vehicle, when the hook arrangement is in its storage position and will not negatively affect the aesthetic appearance of the glove compartment lid. From a functional point of view may it be advantageous from a design perspective of a hook arrangement with a rigid shaft to attach it on the inside, preferably at the very point between the inside and an edge portion of the glove compartment lid. By placing the hinge in this position is it enabled that the shaft of the hook arrangement, which stretches over an edge of the glove compartment lid when the hook arrangement is in its operative position, may be supported from this edge and the hinge itself may be subjected to less load. However, the hinge could also be located on an edge of the glove compartment lid or on the outside of the glove compartment lid.

In order to avoid or reducing disturbing protrusions from the hook arrangement when it is in its storage position could the inside of the compartment lid be provided with a recess adapted to receive the hook when the hook arrangement is in its first, storage position (I).

The hook may be designed in different ways concerning in which way its opening is pointing. According to one embodiment of the invention is the hook arranged to have its opening facing away from the glove compartment lid when the hook arrangement is in its second, operative position (II). According to another embodiment is the hook arranged to have its opening facing towards the glove compartment lid when the hook arrangement is in its second, operative position. The definition of in which way the opening is pointing used herein is the opposite direction to which a handle or the like is moved in order to be able to be caught by the hook while the handle is lowered after being adjusted in said direction. For example, if the hook is defined to have its opening facing away from the glove compartment lid should a handle of the item to be carried by the hook be moved towards the glove compartment to be caught by the hook when the item is lowered in the desired position.

The hook could of course also be designed to have its opening pointing in any direction, e.g. to the left respectively to the right as seen from a passenger seated in front of the glove compartment, or even have several hooks pointing in different directions. An item to be carried by the hook should thus be moved in the opposite direction, i.e. to the right respectively the left in the example above, to be positioned to be carried by the hook when lowered.

The invention thus also relates to an accessory storage compartment for a vehicle, e.g. a glove compartment as described above, comprising such an accessory storage lid for covering an access opening of the accessory storage compartment as exemplified for a glove compartment lid above. Below will further features of such an accessory storage compartment be described with examples referring to a glove compartment.

Hence, a glove compartment for a vehicle may be attached to said glove compartment lid by a lid hinge at a first edge of the glove compartment lid, e.g. a lower edge stretching essentially in a vertical direction and being closer to the floor of a vehicle than an opposite upper edge when the glove compartment is mounted in a vehicle. The hook arrangement will be located at or in the vicinity of opposite edge, i.e. the upper edge of the glove compartment lid in this example.

The hook could of course also be located at other locations.

The shaft of the hook arrangement should be designed designed to fit and pass through a gap between the access opening of the glove compartment and the glove compartment lid when the clove compartment is closed by the glove compartment lid. The shaft may for example be in the shape of a flat strip. Hence, when the hook arrangement is in its second, operative mode (II) could the hook, attached to the inside or an edge of the glove compartment lid via the shaft, be located on the outside of the glove compartment lid.

The invention also relates to a vehicle comprising an accessory storage compartment, e.g. a glove compartment, and an associated accessory storage compartment lid as described above and exemplified for a glove compartment lid.

### BRIEF DESCRIPTION OF THE DRAWINGS

Further objects, features, and advantages of the present disclosure will appear from the following detailed description, wherein certain aspects of the disclosure will be described in more detail with reference to the accompanying drawings, in which:
- Fig. 1: shows an overview of the interior of a vehicle having an accessory storage compartment with a lid in open position (Fig. 1A) respectively closed position (Fig. 1B and 1C)
- Fig. 2: shows an isometric view of the outside of the accessory storage compartment lid from figure 1 provided with a hook arrangement in storage position (fig. 2A) respectively operative position (Fig. 2B)
- Fig. 3: shows an isometric view of the inside of the accessory storage compartment lid from figure 1 having a hook in storage position (fig. 3A) respectively operative position (Fig. 3B)
- Fig. 4: shows an isometric view of portion of the accessory storage compartment lid from figures 2 and 3 with the hook arrangement in storage position (Fig. 4A) respectively operative position (Fig. 4B)
- Fig. 5: shows a side view of the hook arrangement from fig. 4 when the hook arrangement is switched from its storage position (Fig. 5A) via an intermediate position (Fig. 5B) to its operative position (Fig. 5C)

### DETAILED DESCRIPTION

Different embodiments of the present invention will be described with reference to the accompanying drawings. The arrangements described below can be realized in many different forms and should not be construed as being limited to the embodiments described below.

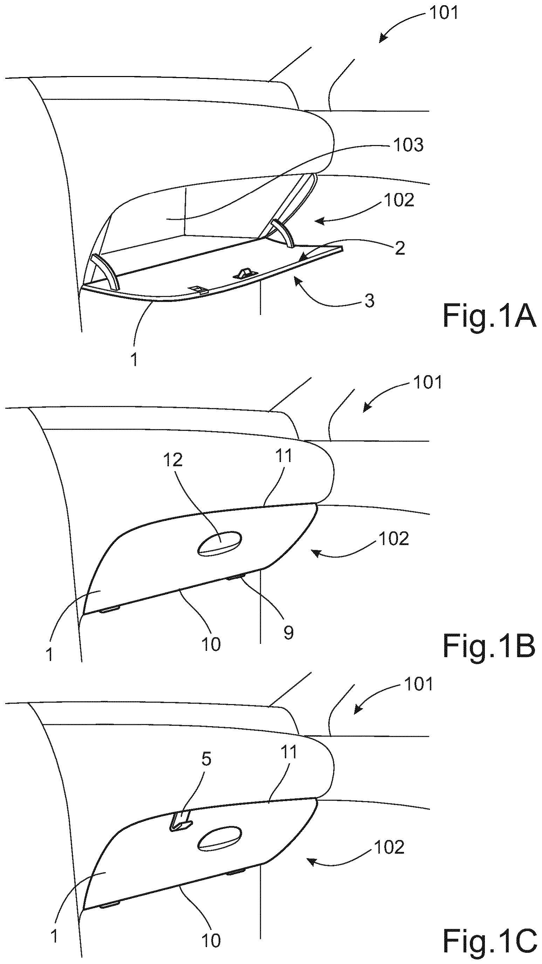

In Fig. 1A -C is the interior of a vehicle 101 having an accessory storage compartment 102 disclosed. The accessory storage compartment 102 is exemplified herein as a glove compartment. The accessory storage compartment 102 is provided with an openable accessory storage compartment lid 1 which covers an access opening 103 and a hook arrangement 4 being operable between a first, storage position (I) and a second, operative position (II). In figure 1A is the accessory storage compartment lid 1 positioned to be in open position and the access opening 103 may be seen. In figure 1B and 1C is the accessory storage compartment lid 1 positioned to be in a closed position. In figure 1B is the hook arrangement in its first, storage position (I) and thus not visible from the outside while the hook arrangement in figure 1C is in its second, operative position and may be seen on the outside. The accessory storage compartment lid 1 comprises an inside 2 facing towards the interior of the accessory storage compartment 102 when the accessory storage compartment lid 1 is closed and an outside 3 facing away from the accessory storage compartment 102. As may be best seen in figure 1B and 1C is the accessory storage compartment lid 1 attached at its lower side 10 by hinges 9 around which the accessory storage compartment lid may be turned in order to change its position from open as disclosed in figure 1A to closed as disclosed in figure 1B and 1C. In its closed position is the accessory storage compartment lid 1 locked by releasable locking arrangement which may be released by pressing a release button 12 near the upper side 11 of the accessory storage compartment lid 1.

The above described glove compartment only serve as an example of an accessory storage compartment 102 suitable for the present invention. A glove compartment having another design, or another kind of accessory storage compartment, could be suitable for the invention.

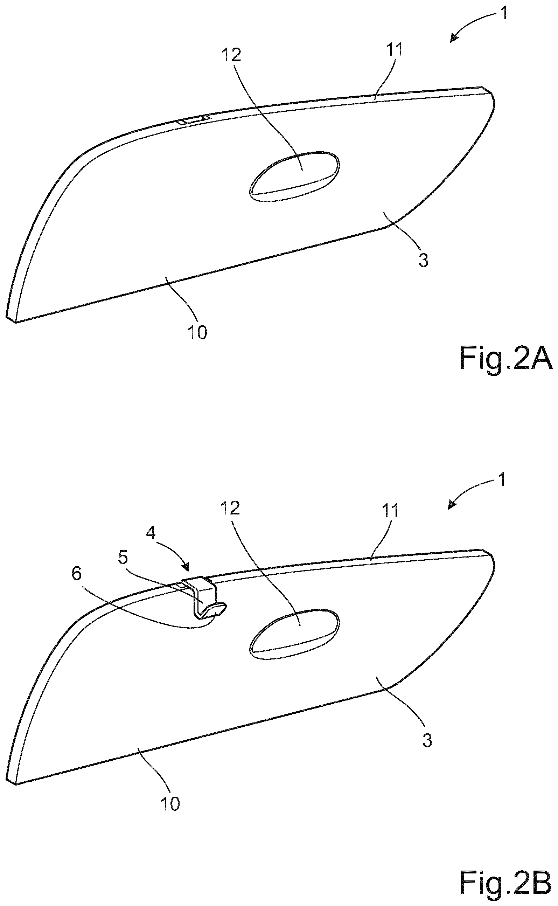

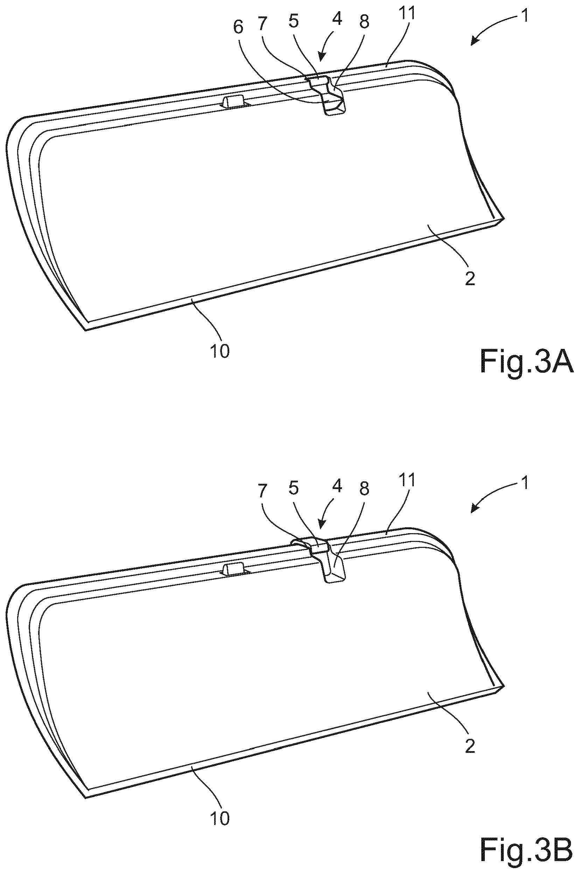

In figure 2 and 3 is disclosed an accessory storage compartment lid 1 which could be used in the compartment 102 described in figure 1. The accessory storage compartment lid 1 comprises a lower side 10 and an upper side 11. In figure 2 is the accessory storage compartment lid 1 shown from its outside 3 and in figure 3 from its inside, i.e. the side intended to face towards the interior of an accessory storage compartment when mounted in such a compartment. The compartment lid has further been provided with a hook arrangement 4 comprising a shaft 5 and a hook 6. As may be best seen in figure 3A is the hook arrangement 4 attached to the accessory storage compartment lid 1 by a hook hinge 7 located on the inside 2 at the upper side 11 of the accessory storage compartment lid 1. The hook 6 is thus attached to the hook hinge 7 via the shaft 5. The hook arrangement 4 may be switched between a first, storage position (I), as shown in figures 2A and 3A, and a second, operative position (II), as shown in figures 2B and 3B. In its storage position is the hook 6 located on the inside 2 of the accessory storage compartment lid. In order to avoid that the hook arrangement 4 will be disturbing when positioned in its first, storage position (I) may the inside 2 of the accessory storage compartment lid 1 be provided with a recess 8 for receiving the hook 6 when the hook 6 is stored. When the hook is in its second, operative position (II), as disclosed in figure 2B, it may be seen that the hook is arranged to have its opening facing away from the accessory storage compartment lid. By the expression of having an opening facing away from the accessory storage compartment lid is meant that an item to be carried by the hook 6 should be displaced in a direction towards the accessory storage compartment lid 1 at a level above the hook 6 and when located above the hook 5 at the opening should the item be lowered to be carried by the hook 6.

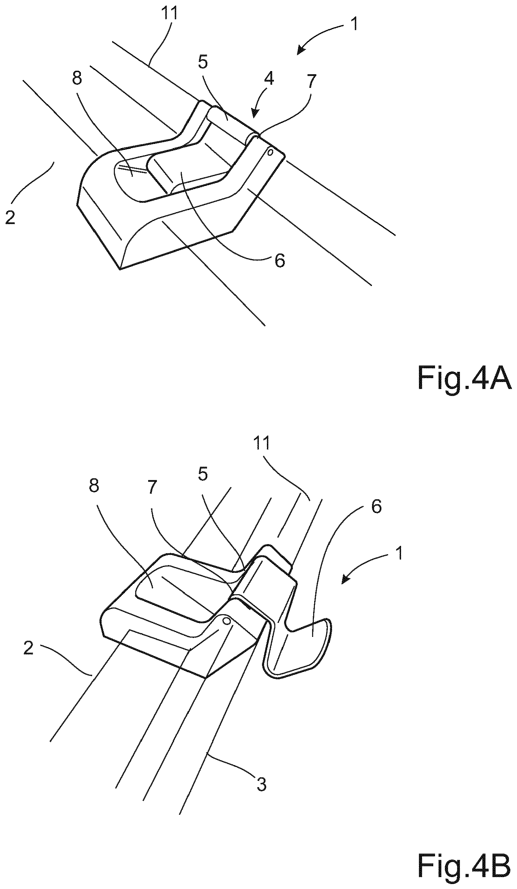

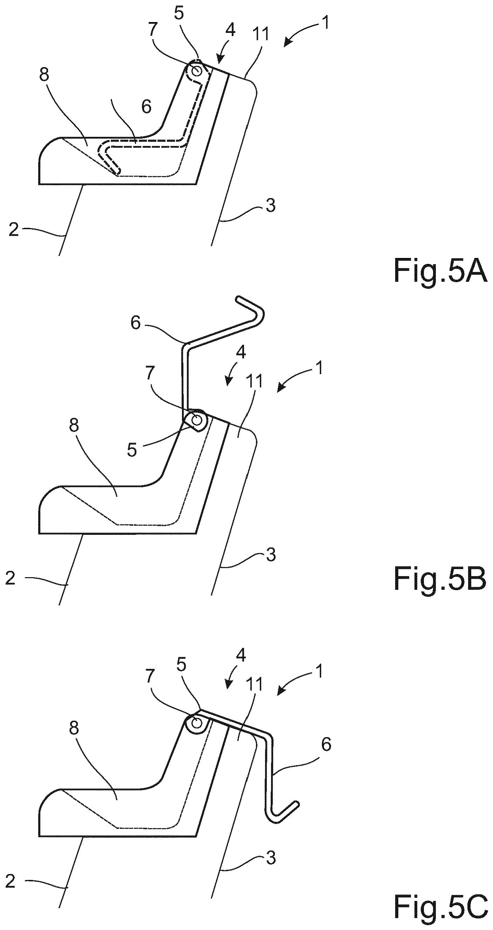

In figure 4 and 5 are detailed views of the hook arrangement showed. In figure 4A is shown an isometric view of the hook arrangement 4 when it is in its first, storage position (I) and it may be seen how the shape of the recess 8 and the inside 2 of the accessory storage compartment lid 1 has been adapted to the shape of the shaft 5 and hook 6 and the shaft is essentially following the surface of the inside 2 and the recess 8 to be in flush with them and the hook 5 will be contained in the recess 8.

In figure 4B is shown an isometric view of the hook arrangement 4 when it is in its second, operative position (II). It may be seen how the design of the shaft 5 is designed to fit and follow the upper side 11 of the accessory storage compartment lid 1 from its attachment at the hook hinge 7 and bend over the edge at the interception of the upper side 11 and the outside 3 of the accessory storage compartment lid 1. The shaft 5 is designed to be thin and in flush with the upper side 11 in order to be able to fit in with and pass through a small gap between the upper side 11 of the accessory storage compartment lid 1 and an edge of a accessory storage compartment 102 (see figure 1).

The hook arrangement 4 may be made from different material, e.g. a polymeric material or metal. In general it is considered from a manufacturing point of view to make the shaft 5 and hook 6 from the same material but they could be made of different materials, e.g. may the shaft 5 be made from a material of higher flexibility with a large shear strength while the hook 6 may be made from a more shape stable and rigid material.

The above described embodiment only serves as an example of how the invention may be designed. For example, the shape of the hook arrangement 4 may be designed quite differently and need not to be designed to look like the arrangement described herein. The opening of the hook may also be altered to point in any desired direction.

Likewise, the arrangement may easily be adapted to other kinds and designs of accessory storage compartments 102 or accessory storage compartments.

## Claims

1. An accessory storage compartment lid (1) for covering an access opening (103) of an accessory storage compartment (102) in a vehicle (101), said accessory storage compartment lid (1) having an inside (2), intended to face towards the interior of the accessory storage compartment (102) when the lid is positioned to cover the opening (103) of the accessory storage compartment (102), and an outside (3) intended to face away from the interior of a accessory storage compartment (102) when the lid is positioned to cover the opening (103) of the accessory storage compartment (102), said accessory storage compartment lid further provided with a hook arrangement (4) comprising a shaft (5) and a hook (6), said hook arrangement (4) may be switched between a first, storage position (I) in which the hook (6) is located at the inside (2) of the accessory storage compartment lid (1) and a second, operative position (II) in which the hook (6) is located on the outside (3) of the accessory storage compartment lid (1)
**characterized in that**
said shaft (5) of the hook arrangement (4) is a rigid self supporting structure which is attached to the accessory storage compartment lid (1) by a hinge (7) located on the inside (2) of the accessory storage compartment lid (1).

2. An accessory storage compartment lid (1) according to any previous claim **characterized in that** said shaft (5) and hook (6) comprised in the hook arrangement (4) are designed as an integral entity.

3. An accessory storage compartment lid (1) according to claim 2 **characterized in that** said shaft (5) and hook (6) comprised in the hook arrangement (4) are made of a polymeric material.

4. An accessory storage compartment lid (1) according to any previous claim **characterized in that** the inside (2) of said compartment lid (1) comprises a recess (8) adapted to receive the hook (6) when the hook arrangement (4) is in its first, storage position (I).

5. An accessory storage compartment lid (1) according to any previous claim **characterized in that** said hook (6) is arranged to have its opening facing away from the accessory storage compartment lid (1) when the hook arrangement (4) is in its second, operative position (II).

6. An accessory storage compartment lid (1) according to any previous claim **characterized in that** said hook (6) is arranged to have its opening facing towards the accessory storage compartment lid (1) when the hook arrangement (4) is in its second, operative position (II).

7. An accessory storage compartment (102) for a vehicle (101) **characterized in that** it comprises a accessory storage compartment lid (1) according to any previous claims for covering an access opening (103) of the accessory storage compartment (102) .

8. An accessory storage compartment (102) for a vehicle (101) according to claim 7 **characterized in that** said accessory storage compartment lid (1) is attached by a lid hinge (9) at a lower edge (10), being closer to the floor of a vehicle (101) than an opposite upper edge (11) when the accessory storage compartment (102) is mounted in a vehicle (101), and said hook arrangement (4) being located at or in the vicinity of the upper edge (11) of the accessory storage compartment lid.

9. An accessory storage compartment (102) for a vehicle (101) according to claim 7 or 8 **characterized in that** said shaft (5) of the hook arrangement (4) is designed to fit and pass through a gap (104) between the access opening (103) of the accessory storage compartment (102) and the accessory storage compartment lid (1) when the hook arrangement (4) is in its second, operative mode (II) such that the hook (6) is located on the outside (3) of the accessory storage compartment lid (1).

10. An accessory storage compartment (102) for a vehicle (101) according to any of claim 7 to 9 **characterized in that** said accessory storage compartment (102) is a glove compartment.

11. A vehicle comprising an accessory storage compartment (102) according to any of claims 7 to 10.

## Patentansprüche

1. Zubehörstaufachdeckel (1) zum Abdecken einer Zugriffs-öffnung (103) eines Zubehörstaufachs (102) in einem Fahrzeug (101), wobei der Zubehörstaufachdeckel (1) eine Innenseite (2), die auf das Innere des Zubehörstaufachs (102) gerichtet sein soll, wenn der Deckel positioniert ist, um die Öffnung (103) des Zubehörstaufachs (102) abzudecken, und eine Außenseite (3) aufweist, die von dem Inneren des Zubehörstaufachs (102) weg gerichtet sein soll, wenn der Deckel positioniert ist, um die Öffnung (103) des Zubehörstaufachs (102) abzudecken, wobei der Zubehörstaufachdeckel ferner mit einer Hakenanordnung (4) ausgestattet ist, die einen Schaft (5) und einen Haken (6) umfasst, wobei die Hakenanordnung (4) zwischen einer ersten Stellung, der Verstaustellung (I), in der sich der Haken (6) an der Innenseite (2) des Zubehörstaufachdeckels (1) befindet, und einer zweiten Stellung, der Wirkstellung (II), in der sich der Haken (6) an der Außenseite (3) des Zubehörstaufachdeckels (1) befindet, gewechselt werden kann,
**dadurch gekennzeichnet, dass**
der Schaft (5) der Hakenanordnung (4) eine feste, selbsttragende Struktur ist, die mit einem Scharnier (7), das sich an der Innenseite (2) des Zubehörstaufachdeckels (1) befindet, an dem Zubehörstaufachdeckel (1) befestigt ist.

2. Zubehörstaufachdeckel (1) nach einem der vorstehenden Ansprüche, **dadurch gekennzeichnet, dass** der Schaft (5) und der Haken (6), die die Hakenanordnung (4) umfasst, als integrale Einheit ausgeführt sind.

3. Zubehörstaufachdeckel (1) nach Anspruch 2, **dadurch gekennzeichnet, dass** der Schaft (5) und der Haken (6), die die Hakenanordnung (4) umfasst, aus einem Polymermaterial bestehen.

4. Zubehörstaufachdeckel (1) nach einem der vorstehenden Ansprüche, **dadurch gekennzeichnet, dass** die Innenseite (2) des Zubehörstaufachdeckels (1) eine Aussparung (8) umfasst, die dazu angepasst ist, den Haken (6) aufzunehmen, wenn die Hakenanordnung (4) in der ersten Stellung, der Verstaustellung (I), ist.

5. Zubehörstaufachdeckel (1) nach einem der vorstehenden Ansprüche, **dadurch gekennzeichnet, dass** der Haken (6) so angeordnet ist, dass seine Öffnung von dem Zubehörstaufachdeckel (1) weg gerichtet ist, wenn die Hakenan-ordnung (4) in der zweiten Stellung, der Wirkstellung (II), ist.

6. Zubehörstaufachdeckel (1) nach einem der vorstehenden Ansprüche, **dadurch gekennzeichnet, dass** der Haken (6) so angeordnet ist, dass seine Öffnung auf den Zubehörstaufachdeckel (1) gerichtet ist, wenn die Hakenanordnung (4) in der zweiten Stellung, der Wirkstellung (II), ist.

7. Zubehörstaufach (102) für ein Fahrzeug (101), **dadurch gekennzeichnet, dass** es einen Zubehörstaufachdeckel (1) nach einem der vorstehenden Ansprüche zum Abdecken einer Zugriffsöffnung (103) des Zubehörstaufachs (102) umfasst.

8. Zubehörstaufach (102) für ein Fahrzeug (101) nach Anspruch 7, **dadurch gekennzeichnet, dass** der Zubehörstaufachdeckel (1) mit einem Deckelscharnier (9) an einer Unterkante (10) befestigt ist, die näher am Boden des Fahrzeugs (101) ist als eine gegenüberliegende Oberkante (11), wenn das Zubehörstaufach (102) in einem Fahrzeug (101) eingebaut ist, und wobei sich die Hakenanordnung (4) an oder in der Nähe der Oberkante (11) des Zubehörstaufachdeckels befindet.

9. Zubehörstaufach (102) für ein Fahrzeug (101) nach Anspruch 7 oder 8, **dadurch gekennzeichnet, dass** der Schaft (5) der Hakenanordnung (4) so ausgeführt ist, dass er durch eine Lücke (104) zwischen der Zugangsöffnung (103) des Zubehörstaufachs (102) und dem Zubehörstaufachdeckel (1) passt und sich dort hindurch bewegt, wenn die Hakenanordnung (4) in der zweiten Stellung, der Wirkstellung (II), ist, sodass sich der Haken (6) an der Außenseite (3) des Zubehörstaufachdeckels (1) befindet.

10. Zubehörstaufach (102) für ein Fahrzeug (101) nach einem der Ansprüche 7 bis 9, **dadurch gekennzeichnet, dass** das Zubehörstaufach (102) ein Handschuhfach ist.

11. Fahrzeug, das ein Zubehörstaufach (102) nach einem der Ansprüche 7 bis 10 umfasst.

## Revendications

1. Couvercle (1) de compartiment de stockage auxiliaire pour couvrir une ouverture d'accès (103) d'un compartiment de stockage auxiliaire (102) dans un véhicule (101), ledit couvercle (1) de compartiment de stockage auxiliaire ayant un intérieur (2), destiné à faire face à l'intérieur du compartiment de stockage auxiliaire (102) lorsque le couvercle est placé pour couvrir l'ouverture (103) du compartiment de stockage auxiliaire (102), et un extérieur (3) destiné à être tourné à l'opposé de l'intérieur d'un compartiment de stockage auxiliaire (102) lorsque le couvercle est placé pour couvrir l'ouverture (103) du compartiment de stockage auxiliaire (102), ledit couvercle de compartiment de stockage auxiliaire comprenant en outre un agencement de crochet (4) comprenant un arbre (5) et un crochet (6), ledit agencement de crochet (4) pouvant être commuté entre une première position de stockage (I) dans laquelle le crochet (6) est situé à l'intérieur (2) du couvercle (1) de compartiment de stockage auxiliaire et une seconde position opérationnelle (II) dans laquelle le crochet (6) est situé sur l'extérieur (3) du couvercle (1) de compartiment de stockage auxiliaire
**caractérisé en ce que**
ledit arbre (5) de l'agencement de crochet (4) est une structure autoportante rigide qui est fixée au couvercle (1) de compartiment de stockage auxiliaire par une charnière (7) située sur l'intérieur (2) du couvercle (1) de compartiment de stockage auxiliaire.

2. Couvercle (1) de compartiment de stockage auxiliaire selon l'une quelconque des revendications précédentes, **caractérisé en ce que** ledit arbre (5) et ledit crochet (6) compris dans l'agencement de crochet (4) sont conçus comme une entité d'une seule pièce.

3. Couvercle (1) de compartiment de stockage auxiliaire selon la revendication 2, **caractérisé en ce que** ledit arbre (5) et ledit crochet (6) compris dans l'agencement de crochet (4) sont en un matériau polymère.

4. Couvercle (1) de compartiment de stockage auxiliaire selon l'une quelconque des revendications précédentes, **caractérisé en ce que** l'intérieur (2) dudit couvercle de compartiment (1) comprend un évidement (8) conçu pour recevoir le crochet (6) lorsque l'agencement de crochet (4) est dans sa première position de stockage (I).

5. Couvercle (1) de compartiment de stockage auxiliaire selon l'une quelconque des revendications précédentes, **caractérisé en ce que** ledit crochet (6) est conçu pour avoir son ouverture tournée à l'opposé du couvercle (1) de compartiment de stockage auxiliaire lorsque l'agencement de crochet (4) est dans sa seconde position opérationnelle (II).

6. Couvercle (1) de compartiment de stockage auxiliaire selon l'une quelconque des revendications précédentes, **caractérisé en ce que** ledit crochet (6) est conçu pour avoir son ouverture tournée vers le couvercle (1) de compartiment de stockage auxiliaire lorsque l'agencement de crochet (4) est dans sa seconde position opérationnelle (II).

7. Compartiment de stockage auxiliaire (102) pour un véhicule (101), **caractérisé en ce qu'**il comprend un couvercle (1) de compartiment de stockage auxiliaire selon l'une quelconque des revendications précédentes pour couvrir une ouverture d'accès (103) du compartiment de stockage auxiliaire (102).

8. Compartiment de stockage auxiliaire (102) pour un véhicule (101) selon la revendication 7, **caractérisé en ce que** ledit couvercle (1) de compartiment de stockage auxiliaire est fixé par une charnière (9) de couvercle à un bord inférieur (10), plus proche du plancher d'un véhicule (101) qu'un bord supérieur opposé (11) lorsque le compartiment de stockage auxiliaire (102) est monté dans un véhicule (101), et ledit agencement de crochet (4) étant situé au niveau ou à proximité du bord supérieur (11) du couvercle de compartiment de stockage auxiliaire.

9. Compartiment de stockage auxiliaire (102) pour un véhicule (101) selon la revendication 7 ou 8, **caractérisé en ce que** ledit arbre (5) de l'agencement de crochet (4) est conçu pour s'insérer dans et passer à travers un espace (104) entre l'ouverture d'accès (103) du compartiment de stockage auxiliaire (102) et le couvercle (1) de compartiment de stockage auxiliaire lorsque l'agencement de crochet (4) est dans son second mode de fonctionnement (II), de sorte que le crochet (6) soit situé sur l'extérieur (3) du couvercle (1) de compartiment de stockage auxiliaire.

10. Compartiment de stockage auxiliaire (102) pour un véhicule (101) selon l'une quelconque des revendications 7 à 9, **caractérisé en ce que** ledit compartiment de stockage auxiliaire (102) est une boîte à gants.

11. Véhicule comprenant un compartiment de stockage auxiliaire (102) selon l'une quelconque des revendications 7 à 10.
